(19) Europäisches Patentamt
European Patent Office
Office européen des brevets

(11) EP 3 774 955 B1

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **19711949.8**

(22) Anmeldetag: **26.03.2019**

(51) Internationale Patentklassifikation (IPC):
***C08F 279/02** (2006.01)* ***C08L 69/00** (2006.01)*
***C08L 55/02** (2006.01)*

(52) Gemeinsame Patentklassifikation (CPC):
(C-Sets verfügbar)
**C08F 279/02; C08L 69/00; C08L 69/005;**
C08L 2205/02 (Forts.)

(86) Internationale Anmeldenummer:
**PCT/EP2019/057584**

(87) Internationale Veröffentlichungsnummer:
**WO 2019/185627 (03.10.2019 Gazette 2019/40)**

(54) **ZUSAMMENSETZUNG UND THERMOPLASTISCHE FORMMASSE ZUR HERSTELLUNG VON FORMKÖRPERN MIT ERHÖHTEM GLANZ**

COMPOSITION AND THERMOPLASTIC MOULDING MATERIAL FOR THE PRODUCTION OF MOULDED STRUCTURES WITH INCREASED GLOSS

COMPOSITION ET MATIÈRE À MOULER THERMOPLASTIQUE DESTINÉES À LA FABRICATION DE CORPS MOULÉS À HAUTE BRILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2018 EP 18164467**

(43) Veröffentlichungstag der Anmeldung:
**17.02.2021 Patentblatt 2021/07**

(73) Patentinhaber: **Covestro Intellectual Property GmbH & Co. KG**
**51373 Leverkusen (DE)**

(72) Erfinder: **SEIDEL, Andreas**
**41542 Dormagen (DE)**

(74) Vertreter: **Levpat**
**c/o Covestro AG**
**Gebäude 4825**
**51365 Leverkusen (DE)**

(56) Entgegenhaltungen:
**EP-A1- 2 657 258**
**WO-A1-2014/086743**
**US-A1- 2016 319 128**

EP 3 774 955 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**(Forts. nächste Seite)**

(52) Gemeinsame Patentklassifikation (CPC): (Forts.)

C-Sets
**C08L 69/00, C08L 55/02, C08L 55/00;**
**C08L 69/005, C08L 55/02, C08L 55/00;**
C08F 279/02, C08F 220/1804

## Beschreibung

Die vorliegende Erfindung betrifft eine Zusammensetzung, bevorzugt eine Polycarbonat-Zusammensetzung, zur Erzeugung einer thermoplastischen Formmasse, die Formmasse selbst, die Verwendung der Zusammensetzung oder Formmasse zur Herstellung von Formkörpern und die Formkörper selbst.

Zusammensetzungen zur Erzeugung thermoplastischer Formmassen, insbesondere auch Polycarbonat-Zusammensetzungen, sind seit langem bekannt. Aus den Zusammensetzungen und aus ihnen erzeugten Formmassen werden Formkörper für eine Vielzahl von Anwendungen, beispielsweise für den Automobilbereich, für den Bausektor und für den Elektronikbereich hergestellt.

Die Eigenschaften der aus solchen thermoplastischen Formmassen hergestellten Formkörper lassen sich durch die Auswahl der Komponenten der Zusammensetzungen und der Mengenbereiche, in denen diese Komponenten in den Zusammensetzungen zum Einsatz kommen an die Anforderungen der jeweiligen Anwendung anpassen.

Zur Erhöhung der Zähigkeit, insbesondere bei tiefen Temperaturen, werden dem Polycarbonat Blendpartner mit kautschukelastischen Eigenschaften als Schlagzähmodifikatoren zugesetzt. Die Schlagzähmodifikatoren wiederum können sich in der chemischen Zusammensetzung der elastischen Komponente oder auch ihrer Morphologie unterscheiden. Weiterhin können beim Herstellverfahren der Schlagzähmodifikatoren eingetragene Verunreinigungen Einfluss auf das Polycarbonat und somit auf die Eigenschaften der Polycarbonat-Zusammensetzungen und der aus ihnen erzeugten Formmassen und Formkörper nehmen.

Acrylnitril-Butadien-Styrol (ABS)-Copolymere werden für Polycarbonat-Zusammensetzungen in großem Umfang als Blendpartner mit kautschukelastischen Eigenschaften eingesetzt. Neben der Verbesserung der Zähigkeit bei tiefen Temperaturen und weiterer mechanischer Eigenschaften wie etwa der Bruchdehnung im Zugversuch wird durch ABS in den meisten Fällen auch die Schmelzefließfähigkeit der aus den Polycarbonat-Zusammensetzungen hergestellten thermoplastischen Formmassen erhöht und so die Verarbeitung zu Formkörpern erleichtert.

US 2016/319128 A1 offenbart eine Polycarbonatharz-Zusammensetzung und ein Formteil für Automobilteile, hergestellt unter Verwendung derselben. Die thermoplastische Harzzusammensetzung umfasst: A) ein Polycarbonatharz; (B) ein kautschukmodifiziertes Vinylpfropfcopolymer, umfassend (B-1) ein erstes kautschukmodifiziertes Vinylpfropfcopolymer, umfassend ein Kautschukpolymer mit einem mittleren Teilchendurchmesser von etwa 230 nm bis etwa 380 nm, und (B-2) ein zweites kautschukmodifiziertes Vinylpfropfcopolymer, umfassend ein Kautschukpolymer mit einem mittleren Teilchendurchmesser von etwa 60 nm bis etwa 200 nm; C) ein aromatisches Vinyl-Vinylcyanid-Copolymer; und (D) ein (Meth)acrylcopolymer. Die thermoplastische Harzzusammensetzung weist gute Eigenschaften hinsichtlich Wärmestabilität und Glanz auf.

EP 2657258 A1 beschreibt die Herstellung einer thermoplastischen Zusammensetzung. Dabei wird eine salzhaltige Komponente enthaltend ein Pfropfpolymer mit Wasser behandelt und anschließend mit einem weiteren thermoplastischem Polymer und Additiven aufgeschmolzen und dispergiert. Aus den Zusammensetzungen hergestellte Formkörper weisen eine gute Oberfläche nach Wärme-Feucht-Lagerung auf.

WO2014086743 A1 offenbart flammwidrige, schlagzähmodifizierte, hochtemperaturstabile Polycarbonat-ABS Formmassen mit hohen hohem Elastizitätsmodul, guter Fließfähigkeit und hoher Hydrolysestabilität. Die Formmassen enthalten Polycarbonat, kautschukmodifiziertes Pfropfpolymerisat, ein cyclisches Phosphazen, kautschukfreies Vinyl(co)polymer oder Polyalkylenterephthalat, Additive und Antitropfmittel.

Bei vielen Anwendungen sind die hergestellten Formkörper unter Spannung und gleichzeitig im Kontakt mit Chemikalien. Unter diesen Bedingungen kann es zu einem Versagen der Formkörper durch Spannungsrisse kommen. Die Spannungsrissbeständigkeit ist daher eine weitere Eigenschaft, die durch den Einsatz der kautschukelastischen Komponente verbessert werden soll.

Acrylnitril-Butadien-Styrol (ABS) Copolymere lassen sich über radikalische Polymerisation herstellen. Ein gebräuchliches Verfahren ist das Masse-Polymerisationsverfahren, das zu einem Produkt mit hoher Reinheit und günstigen rheologischen Eigenschaften führt. Die hohe Reinheit solcher im Masse-Polymerisationsverfahren hergestellten ABS-Polymere ermöglicht Zusammensetzungen mit Polycarbonat, die sich zur Erzeugung von PC+ABS-Formmassen eignen, welche eine gute Beständigkeit gegenüber bestimmten Alterungseinflüssen aufweisen, insbesondere eine verbesserte Beständigkeit unter warm-feuchten Bedingungen, denen die aus den Formmassen hergestellten Formkörper im Gebrauch ausgesetzt werden können.

WO 2007/009622 A1 beispielsweise offenbart Polycarbonat-Masse-ABS-Zusammensetzungen mit niedrigem Lithium-Gehalt, die sich durch verbesserte Hydrolysebeständigkeit auszeichnen.

Es ist auch bekannt, dass durch Modifikationen der ABS Komponente die mechanischen und rheologischen Eigenschaften von Polycarbonat-ABS Formmassen weiter verbessert und so an besondere Anforderungen angepasst werden können.

WO 01/62851 A1 offenbart PC+Masse-ABS-Zusammensetzungen mit verbesserter Verarbeitbarkeit und verbesserter Schlagzähigkeit im spritzgegossenen Bauteil enthaltend Masse-ABS enthaltend einen sternverzweigten Kautschuk mit drei oder mehr Armen.

WO 01/70884 A1 offenbart PC+Masse-ABS-Zusammensetzungen mit reduziert anisotropem Schlagzähigkeitsverhalten enthaltend Masse-ABS mit einer Matrixphase enthaltend ein Copolymer eines aromatischen Monovinyliden-Monomers, eines ethylenisch ungesättigten Nitrilmonomers und eines Esters der Acrylsäure, worin der Gehalt des Esters der Acrylsäure im Bereich 0,1 bis 15 Gew.-% des Copolymers liegt.

Neben der Variation der einen eingesetzten ABS Komponente ist es in Polymerblendsystemen auch möglich, durch Mischungen von mehreren solcher Blendpartner weitere Optimierungen hinsichtlich spezieller Eigenschaftsprofile zu erreichen.

WO 2007/065577 A1 offenbart PC+ABS-Formmassen auf Basis von Mischungen zweier unterschiedlicher Masse-ABS Polymere enthaltend freies (Co)Polymerisat unterschiedlichen Molekulargewichts, welche eine verbesserte Balance aus Zähigkeit auch bei tiefen Temperaturen und Schmelzefließfähigkeit aufweisen und darüber hinaus eine gute Alterungsbeständigkeit unter dem Einfluss eines feucht-warmen Klimas, eine gute Verarbeitungsstabilität sowie eine gute Chemikalienbeständigkeit aufweisen.

Durch den Einsatz von ABS hergestellt im Masse-Polymerisationsverfahren (Masse-ABS) können somit PC+ABS-Zusammensetzungen erhalten werden, die ein fein abgestimmtes Eigenschaftsprofil mit den oben genannten Vorteilen aufweisen. Allerdings werden durch dieses Verfahren in der Regel eher ABS-Polymerisate enthaltend vergleichsweise grobteilige kautschukhaltige Pfropfpartikel erzeugt, die den Oberflächeneindruck der aus solchen PC+Masse-ABS-Zusammensetzungen oder PC+Masse-ABS-Formmassen hergestellten Formkörper negativ beeinflussen können. Insbesondere ist der Glanzgrad der aus solchen PC+Masse-ABS-Zusammensetzungen oder PC+Masse-ABS-Formmassen hergestellten Formkörper für viele Anwendungen nicht ausreichend.

Es war daher wünschenswert, eine Zusammensetzung zur Herstellung einer thermoplastischen PC+Masse-ABS-Formmasse bereitzustellen, aus denen sich Formkörper mit einem erhöhten Oberflächenglanz herstellen lassen. Bevorzugt sollte sich die Zusammensetzung zudem auszeichnen durch eine gute Balance aus hoher Fließfähigkeit und Verarbeitungsstabilität der daraus hergestellten Formmasse sowie einer guten (Kerbschlag-)Zähigkeit, insbesondere auch bei tiefen Temperaturen, und Spannungsrissbeständigkeit unter Chemikalieneinfluss der aus den Formmassen erzeugt aus der Zusammensetzung hergestellten Formkörper . Weiter bevorzugt sollen die aus der Zusammensetzung erzeugte Formmasse und die daraus hergestellten Formkörper eine gute Alterungsbeständigkeit bei Exposition gegenüber feucht-warmen Klima aufweisen. Besonders bevorzugt soll auch die Bruchdehnung verbessert sein.

Es wurde nun überraschend gefunden, dass eine Zusammensetzung zur Erzeugung einer thermoplastischen Formmasse,

- wobei die Zusammensetzung die folgenden Bestandteile enthält oder hieraus besteht und
- wobei das Gewichtsverhältnis der Komponenten B und C in der Zusammensetzung im Bereich von 20:80 bis 90:10, bevorzugt im Bereich von 40:60 bis 85:15, besonders bevorzugt im Bereich von 60:40 bis 80:20 liegt,

die gewünschten Eigenschaften aufweist:

A) mindestens ein Polymer ausgewählt aus der Gruppe bestehend aus aromatischem Polycarbonat, und aromatischem Polyestercarbonat,

B) kautschukmodifiziertes Vinylcopolymerisat aus

B.1) 80 bis 95 Gew.-%, bezogen auf das kautschukmodifizierte Vinylcopolymerisat B, Struktureinheiten abgeleitet von

B.1.1) 60 bis 90 Gew.-%, bezogen auf die Komponente B.1, Styrol

B.1.2) 10 bis 40 Gew.-%, bezogen auf die Komponente B.1, Acrylnitril

B.2) 5 bis 20 Gew.-%, bezogen auf das kautschukmodifizierte Vinylcopolymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,

wobei das kautschukmodifizierte Vinylcopolymerisat B

(i) eine disperse Phase bestehend aus

(i.1) mit Vinylcopolymerisat aus Struktureinheiten gemäß B.1 gepfropften Kautschukpartikeln und

(i.2) in den Kautschukpartikeln als separierte disperse Phase eingeschlossenes Vinylcopolymerisat ebenfalls aus Struktureinheiten gemäß B.1

und
(ii) eine nicht an die Kautschukpartikel gebundene und nicht in diese Kautschukpartikel eingeschlossene kautschukfreie Vinylcopolymerisat-Matrix bestehend aus Struktureinheiten gemäß B.1

enthält,
C) kautschukmodifiziertes Vinylcopolymerisat aus

C.1) 80 bis 95 Gew.-%, bezogen auf das kautschukmodifizierte Vinylcopolymerisat C, Struktureinheiten abgeleitet von

C.1.1) 60 bis 85 Gew.-%, bezogen auf die Komponente C.1, Styrol
C.1.2) 10 bis 35 Gew.-%, bezogen auf die Komponente C.1, Acrylnitril
C.1.3) 0,5 bis 15 Gew.-%, bezogen auf die Komponente C.1, mindestens einem (Meth)acrylsäure-Alkylester,

C.2) 5 bis 20 Gew.-%, bezogen auf das kautschukmodifizierte Vinylcopolymerisat C, einer oder mehrerer kautschukelastischer Pfropfgrundlagen mit Glasübergangstemperaturen < -50°C enthaltend mindestens 50 Gew.-%, bezogen auf C.2, an vom 1,3-Butadien abgeleiteten Struktureinheiten,

wobei das kautschukmodifizierte Vinylcopolymerisat C
(iii) eine disperse Phase bestehend aus

(iii.1) mit Vinylcopolymerisat aus Struktureinheiten gemäß C.1 gepfropften Kautschukpartikeln und
(iii.2) in den Kautschukpartikeln als separierte disperse Phase eingeschlossenes Vinylcopolymerisat ebenfalls aus Struktureinheiten gemäß C.1

und
(iv) eine nicht an die Kautschukpartikel gebundene und nicht in diese Kautschukpartikel eingeschlossene kautschukfreie Vinylcopolymerisat-Matrix bestehend aus Struktureinheiten gemäß C.1
enthält.

Bevorzugt enthält die Zusammensetzung 30 bis 90 Gew.-%, weiter bevorzugt 40 bis 80 Gew.-%, besonders bevorzugt 55 bis 75 Gew.-% der Komponente A.
Bevorzugt enthält die Zusammensetzung 5 bis 50 Gew.-%, bevorzugt 10 bis 40 Gew.-%, besonders bevorzugt 15 bis 35 Gew.-% der Komponente B.
Bevorzugt enthält die Zusammensetzung 3 bis 40 Gew.-%, bevorzugt 5 bis 30 Gew.-%, besonders bevorzugt 6 bis 15 Gew.-% der Komponente C.
Bevorzugt enthält die Zusammensetzung 0 bis 20 Gew.-%, bevorzugt 0,1 bis 10 Gew.-%, weiter bevorzugt 0,2 bis 5 Gew.-% Polymeradditive als weitere Komponente D.
Bevorzugt enthält die Zusammensetzung oder besteht aus

30 bis 90 Gew.-%, weiter bevorzugt 40 bis 80 Gew.-%, besonders bevorzugt 55 bis 75 Gew.-% der Komponente A,
5 bis 50 Gew.-%, bevorzugt 10 bis 40 Gew.-%, besonders bevorzugt 15 bis 35 Gew.-%der Komponente B,
3 bis 40 Gew.-%, bevorzugt 5 bis 30 Gew.-%, besonders bevorzugt 6 bis 15 Gew.-% der Komponente C,
0 bis 20 Gew.-%, bevorzugt 0,1 bis 10 Gew.-%, weiter bevorzugt 0,2 bis 5 Gew.-% Polymeradditive als weitere Komponente D.

Bevorzugt besteht die Zusammensetzung zu mindestens 90 Gew.-% aus den Komponenten A bis D. Besonders bevorzugt besteht die Zusammensetzung nur aus den Komponenten A bis D.
Weiter bevorzugt enthält die Zusammensetzung 1,5 bis 7,5 Gew.-%, bevorzugt 2,0 bis 6,0 Gew.-%, besonders bevorzugt 2,5 bis 4,5 Gew.-% an von 1,3-Butadien abgeleiteten Struktureinheiten.

**Komponente A**

Als Komponente A wird ein Thermoplast oder einer Mischung verschiedener Thermoplasten ausgewählt aus mindestens einem Polymer aus der Gruppe bestehend aus Polycarbonat und Polyestercarbonat eingesetzt.
Bevorzugt wird die Komponente A ausgewählt aus mindestens einem Polymer aus der Gruppe bestehend aus aromatischem Polycarbonat und aromatischem Polyestercarbonat, in an meisten bevorzugter Ausführungsform handelt es sich bei Komponente A um aromatisches Polycarbonat oder eine Mischung verschiedener aromatischer Polycarbonate.

Unter "Polycarbonat" werden erfindungsgemäß sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch bevorzugt aromatische Dicarbonsäureester-Gruppen ersetzt sein. Derartige Polycarbonate, die sowohl Säurereste der Kohlensäure als auch Säurereste von, bevorzugt aromatischen Dicarbonsäuren in die Molekülkette eingebaut enthalten, werden als aromatische Polyestercarbonate bezeichnet.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen Polyestercarbonate haben mittlere Molekulargewichte Mw bestimmt durch GPC (Gelpermeationschromatographie in Methylenchlorid mit Polycarbonat als Standard) von 15 kg/mol bis 50 kg/mol, bevorzugt von 20 kg/mol bis 35 kg/mol, besonders bevorzugt von 23 kg/mol bis 33 kg /mol.

Die Herstellung der bevorzugten aromatischen Polycarbonate und aromatischen Polyestercarbonate erfolgt in bekannter Weise aus Diphenolen, Kohlensäure oder Kohlensäurederivaten und, im Falle der Polyestercarbonate, bevorzugt aromatischen Dicarbonsäuren oder Dicarbonsäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Die Herstellung aromatischer Polycarbonate und Polyestercarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Diphenolen mit beispielsweise Diphenylcarbonat möglich.

Für die Herstellung von Polycarbonaten geeignete Dihydroxyarylverbindungen sind solche der Formel (1)

HO-Z-OH (1),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2)

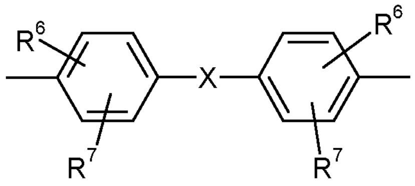

(2),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für

jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis Cs-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2-$
oder für einen Rest der Formel (2a)

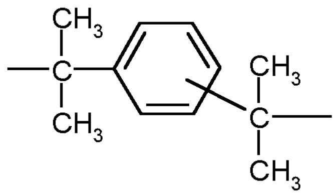

(2a).

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Am stärksten bevorzugt ist 2,2-Bis-(4-hydroxyphenyl)-propan (Bisphenol A).

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5 -trimethylcyclohexan.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Am meisten bevorzugt kommt als Komponente A aromatisches Polycarbonat auf Basis von Bisphenol A zum Einsatz.

<u>**Komponente B**</u>

Bei Komponente B handelt es sich um kautschukmodifizierte Vinylcopolymerisate aus

B.1) 80 bis 95 Gew.-%, bevorzugt 85 bis 93 Gew.-%, weiter bevorzugt 88 bis 92 Gew.-%, bezogen auf das kautschukmodifizierte Vinylcopolymerisat B, Struktureinheiten abgeleitet von

B.1.1) 60 bis 90 Gew.-%, bevorzugt 65 bis 85 Gew.-%, besonders bevorzugt 70 bis 80 Gew.-%, bezogen auf die Komponente B.1, Styrol
B.1.2) 10 bis 40 Gew.-%, bevorzugt 15 bis 35 Gew.-%, besonders bevorzugt 20 bis 30 Gew.-% bezogen auf die Komponente B.1, Acrylnitril, und

B.2) 5 bis 20 Gew.-%, bevorzugt 7 bis 15 Gew.-%, weiter bevorzugt 8 bis 12 Gew.-%, bezogen auf das kautschukmodifizierte Vinylcopolymerisat B, einer oder mehrerer kautschukelastischer Pfropfgrundlagen mit Glasübergangstemperaturen $T_g$ < -50°C, bevorzugt von < -60°C, besonders bevorzugt < -70°C enthaltend mindestens 50 Gew.-%, bevorzugt mindestens 75 Gew.-%, besonders bevorzugt 100 Gew.-%, bezogen auf B.2, an vom 1,3-Butadien abgeleiteten Struktureinheiten,

wobei das kautschukmodifizierte Vinylcopolymerisat B

(i) eine disperse Phase bestehend aus

(i.1) mit Vinylcopolymerisat aus Struktureinheiten gemäß B.1 gepfropften Kautschukpartikeln und
(i.2) in den Kautschukpartikeln als separierte disperse Phase eingeschlossenes Vinylcopolymerisat ebenfalls aus Struktureinheiten gemäß B.1
und

(ii) eine nicht an die Kautschukpartikel gebundene und nicht in diese Kautschukpartikel eingeschlossene kautschukfreie Vinylcopolymerisat-Matrix bestehend aus Struktureinheiten gemäß B.1

enthält.

Die disperse Phase gemäß (i) weist bevorzugt einen mittleren Durchmesser D50 gemessen per Ultrazentrifugation von 0,3 bis 2,0 μm, weiter bevorzugt von 0,5 bis 1,5 μm, insbesondere von 0,7 bis 1,2 aufweist.

Die Glasübergangstemperatur $T_g$ wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die kautschukmodifizierten Vinylcopolymerisate gemäß Komponente B weisen eine Schmelzeflussrate (MFR), gemessen gemäß ISO 1133 (Version von 2012) bei 220°C mit einer Stempellast von 10 kg, von bevorzugt 2 bis 20 g/10min, besonders bevorzugt 3 bis 15 g/10min, insbesondere 4 bis 8 g/10min auf. Kommen Mischungen aus mehreren kautschukmodifizierten Vinylcopolymerisaten als Komponente B zum Einsatz, so gelten die bevorzugten MFR-Bereiche für den Mittelwert des über die Massenanteile der Komponenten in der Mischung gewichteten MFRs der Einzelkomponenten in Komponente B.

Derartige kautschukmodifizierte Vinylcopolymerisate B werden hergestellt durch Polymerisation, bevorzugt im

Masse-Polymerisationsverfahren, von B.1 und B.2 in den oben angegebenen Gewichtsanteilen.

Bei dem zur Herstellung des kautschukmodifizierten Vinylcopolymerisats B bevorzugt angewandten Masse-Polymerisationsverfahren erfolgt sowohl die Polymerisation der Vinylmonomeren gemäß B.1 als auch eine Pfropfung des so entstehenden Vinylcopolymers auf die kautschukelastische Pfropfgrundlage gemäß B.2. Des Weiteren erfolgt bei dieser Reaktionsführung durch Selbstorganisation (Phasenseparation) die Ausbildung einer dispersen Phase (i) bestehend aus

(i.1) mit Vinylcopolymerisat aus Struktureinheiten gemäß B.1 gepfropften Kautschukpartikeln und
(i.2) in den Kautschukpartikeln als separierte disperse Phase eingeschlossenes Vinylcopolymerisat ebenfalls aus Struktureinheiten gemäß B.1,

wobei diese kautschukhaltige disperse Phase (i) in einer nicht an die Kautschukpartikel gebundene und nicht in diese Kautschukpartikel eingeschlossene kautschukfreie Vinylcopolymerisat-Matrix (ii) bestehend aus Struktureinheiten gemäß B.1 dispergiert vorliegt.

Das kautschukfreie Vinylcopolymerisat (ii) lässt sich im Gegensatz zu den anderen Vinylcopolymerisat-Anteilen in der Komponente B durch geeignete Lösungsmittel wie beispielsweise Aceton herauslösen.

Die Größe der dispersen Phase (i) in den so hergestellten kautschukmodifizierten Vinylcopolymerisaten B wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-796) bestimmt.

Bevorzugte Pfropfgrundlagen B.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B.1).

Besonders bevorzugt als Pfropfgrundlage B.2 ist reiner Polybutadienkautschuk. In einer weiteren bevorzugten Ausführungsform handelt es sich bei B.2 um Styrol-Butadien-BlockcopolymerKautschuk.

Die Komponente B weist bevorzugt einen Polybutadiengehalt von 5 bis 18 Gew.-%, weiter bevorzugt von 7 bis 14 Gew.-%, insbesondere von 8 bis 12 Gew.-% auf.

Besonders bevorzugte kautschukmodifizierte Vinylcopolymerisate gemäß Komponente B sind Masse-ABS-Polymerisate wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Das nicht an die Kautschukgrundlage(n) B.2 chemisch gebundene und nicht in den Kautschukpartikeln eingeschlossene Vinylcopolymerisat (ii) kann wie zuvor dargestellt herstellungsbedingt bei der Polymerisation der Pfropfpolymerisate B entstehen. Ebenso ist es möglich, dass ein Teil dieses nicht an die Kautschukgrundlage(n) B.2 chemisch gebundene und nicht in den Kautschukpartikeln eingeschlossene Vinylcopolymerisats (ii) im kautschukmodifizierten Vinylcopolymerisat gemäß Komponente B herstellungsbedingt bei dessen Herstellung entsteht und ein anderer Teil separat polymerisiert und der Komponente B als Bestandteil der Komponente B zugesetzt wird. Der Anteil x(ii) des Vinylcopolymerisats (ii), unabhängig von dessen Ursprung, gemessen als in Aceton löslicher Anteil, beträgt in der Komponente B, bezogen auf die Komponente B, bevorzugt mindestens 60 Gew.-%, besonders bevorzugt mindestens 70 Gew-%, weiter bevorzugt mindestens 75 Gew.-%. Der Anteil x(ii) des Vinylcopolymerisats (ii), unabhängig von dessen Ursprung, gemessen als in Aceton löslicher Anteil, beträgt in der Komponente B, bezogen auf die Komponente B, bevorzugt maximal 95 Gew.-%, besonders bevorzugt maximal 90 Gew-%, weiter bevorzugt maximal 85 Gew.-%.

Dieses Vinylcopolymerisat (ii) weist in den kautschukmodifizierten Vinylcopolymerisaten gemäß Komponente B bevorzugt ein gewichtgemitteltes Molekulargewicht $M_w$(ii) von 140 bis 200 kg/mol, weiter bevorzugt 150 bis 180 kg/mol auf.

Das gewichtsgemittelte Molekulargewicht $M_w$(ii) des Vinylcopolymerisats (ii) in Komponente B wird im Rahmen der vorliegenden Erfindung per Gelpermeationschromatographie (GPC) in Tetrahydrofuran gegen Polystyrol als Standard gemessen.

Die Komponente B ist bevorzugt frei von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten.

Die Komponente B enthält bevorzugt weniger als 100 ppm, besonders bevorzugt weniger als 50 ppm, ganz besonders bevorzugt weniger als 20 ppm Ionen von Alkalimetallen und Erdalkalimetallen.

## Komponente C

Bei Komponente C handelt es sich um kautschukmodifizierte Vinylcopolymerisate aus

C.1) 80 bis 95 Gew.-%, bevorzugt 85 bis 93 Gew.-%, weiter bevorzugt 88 bis 92 Gew.-%, bezogen auf das kautschukmodifizierte Vinylcopolymerisat C, Struktureinheiten abgeleitet von

C.1.1) 60 bis 85 Gew.-%, bevorzugt 65 bis 80 Gew.-%, besonders bevorzugt 67 bis 75 Gew.-%, bezogen auf die Komponente C.1, Styrol
C.1.2) 10 bis 35 Gew.-%, bevorzugt 15 bis 30 Gew.-%, besonders bevorzugt 20 bis 28 Gew.-%, bezogen auf die Komponente C.1, Acrylnitril
C.1.3) 0,5 bis 15 Gew.-%, bevorzugt 2 bis 8 Gew.-%, besonders bevorzugt 3 bis 6 Gew.-%, bezogen auf die Komponente C.1, mindestens einem (Meth)acrylsäureAlkylester, und

C.2) 5 bis 20 Gew.-%, bevorzugt 7 bis 15 Gew.-%, weiter bevorzugt 8 bis 12 Gew.-%, bezogen auf das kautschukmodifizierte Vinylcopolymerisat C, einer oder mehrerer kautschukelastischer Pfropfgrundlagen mit Glasübergangstemperaturen $T_g$ < -50°C, bevorzugt von < -60°C, besonders bevorzugt < -70°C enthaltend mindestens 50 Gew.-%, bevorzugt mindestens 75 Gew.-%, besonders bevorzugt 100 Gew.-%, bezogen auf C.2, an vom 1,3-Butadien abgeleiteten Struktureinheiten,
wobei das kautschukmodifizierte Vinylcopolymerisat C

(iii) eine disperse Phase bestehend aus

(iii.1) mit Vinylcopolymerisat aus Struktureinheiten gemäß C.1 gepfropften Kautschukpartikeln und
(iii.2) in den Kautschukpartikeln als separierte disperse Phase eingeschlossenes Vinylcopolymerisat ebenfalls aus Struktureinheiten gemäß C. 1
und

(iv) eine nicht an die Kautschukpartikel gebundene und nicht in diese Kautschukpartikel eingeschlossene kautschukfreie Vinylcopolymerisat-Matrix bestehend aus Struktureinheiten gemäß C. 1

enthält.

Die disperse Phase gemäß (iii) weist bevorzugt einen mittleren Durchmesser D50 gemessen per Ultrazentrifugation von 0,3 bis 2,0 μm, weiter bevorzugt von 0,4 bis 1,5 μm, insbesondere von 0,4 bis 0,7 auf.

Die kautschukmodifizierten Vinylcopolymerisate gemäß Komponente C weisen eine Schmelzeflussrate (MFR), gemessen gemäß ISO 1133 (Version von 2012) bei 220°C mit einer Stempellast von 10 kg, von bevorzugt 2 bis 60 g/10min, besonders bevorzugt 10 bis 50 g/10min, insbesondere 20 bis 40 g/10min auf. Kommen Mischungen aus mehreren kautschukmodifizierten Vinylcopolymerisaten als Komponente C zum Einsatz, so gelten die bevorzugten MFR-Bereiche für den Mittelwert des über die Massenanteile der Komponenten in der Mischung gewichteten MFRs der Einzelkomponenten.

Derartige kautschukmodifizierte Vinylcopolymerisate C werden hergestellt durch Polymerisation, bevorzugt im Masse-Polymerisationsverfahren, von C.1 und C.2 in den oben angegebenen Gewichtsanteilen.

Bei dem zur Herstellung des kautschukmodifizierten Vinylcopolymerisats C bevorzugt angewandten Masse-Polymerisationsverfahren erfolgt sowohl die Polymerisation der Vinylmonomeren gemäß C.1 als auch eine Pfropfung des so entstehenden Vinylcopolymers auf die kautschukelastische Pfropfgrundlage gemäß C.2. Des Weiteren erfolgt bei dieser Reaktionsführung durch Selbstorganisation (Phasenseparation) die Ausbildung einer dispersen Phase (iii) bestehend aus

(iii.1) mit Vinylcopolymerisat aus Struktureinheiten gemäß C.1 gepfropften Kautschukpartikeln und
(iii.2) in den Kautschukpartikeln als separierte disperse Phase eingeschlossenes Vinylcopolymerisat ebenfalls aus Struktureinheiten gemäß C.1,

wobei diese kautschukhaltige disperse Phase (iii) in einer nicht an die Kautschukpartikel gebundene und nicht in diese Kautschukpartikel eingeschlossene kautschukfreie Vinylcopolymerisat-Matrix (iv) bestehend aus Struktureinheiten gemäß C.1 dispergiert vorliegt.

Das kautschukfreie Vinylcopolymerisat (iv) lässt sich im Gegensatz zu den anderen Vinylcopolymerisat-Anteilen in der Komponente C durch geeignete Lösungsmittel wie beispielsweise Aceton herauslösen.

Die Größe der dispersen Phase (iv) in den so hergestellten kautschukmodifizierten Vinylcopolymerisaten C wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der

Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-796) bestimmt.

Das Monomer gemäß C.1.3 ist ein (Meth)acrylsäure-Alkylester, bevorzugt ein (Meth)Acrylsäure-(C1-C8)-Alkylester.

Weiter bevorzugte Monomere C.1.3 sind Methylmethacrylat, Ethylmethacrylat, n-Butylacrylat und tert.-Butylacrylat. Am meisten bevorzugt ist C.1.3 n-Butylacrylat.

Bevorzugte Pfropfgrundlagen C.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß C.1).

Besonders bevorzugt als Pfropfgrundlage C.2 ist reiner Polybutadienkautschuk. In einer weiteren bevorzugten Ausführungsform handelt es sich bei C.2 um Styrol-Butadien-BlockcopolymerKautschuk.

Die Komponente C weist bevorzugt einen Polybutadiengehalt von 5 bis 18 Gew.-%, weiter bevorzugt von 7 bis 14 Gew.-%, insbesondere von 8 bis 12 Gew.-% auf.

Besonders bevorzugte kautschukmodifizierte Vinylcopolymerisate gemäß Komponente C lassen sich analog den Offenbarungen z.B. der DE-OS 2 035 390 (=US-PS 3 644 574) oder der DE-OS 2 248 242 (=GB-PS 1 409 275) bzw. in Ullmanns, Enzyklopädie der Technischen Chemie, Bd. 19 (1980), S. 280 ff. herstellen.

Das nicht an die Kautschukgrundlage(n) C.2 chemisch gebundene und nicht in den Kautschukpartikeln eingeschlossene Vinylcopolymerisat (iv) kann wie zuvor dargestellt herstellungsbedingt bei der Polymerisation der Pfropfpolymerisate C entstehen. Ebenso ist es möglich, dass ein Teil dieses nicht an die Kautschukgrundlage(n) C.2 chemisch gebundene und nicht in den Kautschukpartikeln eingeschlossene Vinylcopolymerisats (iv) im kautschukmodifizierten Vinylcopolymerisat gemäß Komponente C herstellungsbedingt bei dessen Herstellung entsteht und ein anderer Teil separat polymerisiert und der Komponente C als Bestandteil der Komponente C zugesetzt wird. Der Anteil x(iv) des Vinylcopolymerisats (iv), unabhängig von dessen Ursprung, gemessen als in Aceton löslicher Anteil, beträgt in der Komponente C, bezogen auf die Komponente C, bevorzugt mindestens 60 Gew.-%, besonders bevorzugt mindestens 70 Gew-%, weiter bevorzugt mindestens 75 Gew.-%. Der Anteil x(iv) des Vinylcopolymerisats (iv), unabhängig von dessen Ursprung, gemessen als in Aceton löslicher Anteil, beträgt in der Komponente B, bezogen auf die Komponente B, bevorzugt maximal 95 Gew.-%, besonders bevorzugt maximal 90 Gew-%, weiter bevorzugt maximal 85 Gew.-%.

Dieses Vinylcopolymerisat (iv) weist in den kautschukmodifizierten Vinylcopolymerisaten gemäß Komponente C bevorzugt ein gewichtgemitteltes Molekulargewicht $M_w$(iv) von 110 bis 130 kg/mol auf.

Das gewichtsgemittelte Molekulargewicht $M_w$(iv) des Vinylcopolymerisats (iv) in Komponente C wird im Rahmen der vorliegenden Erfindung per Gelpermeationschromatographie (GPC) in Tetrahydrofuran gegen Polystyrol als Standard gemessen.

Die Komponente C ist bevorzugt frei von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten.

Die Komponente C enthält bevorzugt weniger als 100 ppm, besonders bevorzugt weniger als 50 ppm, ganz besonders bevorzugt weniger als 20 ppm Ionen von Alkalimetallen und Erdalkalimetallen.

Die Komponenten B und C enthalten jeweils eine Vinylpolymerisat-Matrix mit den oben angegebenen Molekulargewichten Mw(ii) und Mw(iv). Daraus ergibt sich ein gemitteltes Molekulargewicht gMw, welches gemäß folgender Gleichung berechnet wird:

$$gMw = [x(ii) \cdot Mw(ii) \cdot x(B) + x(iv) \cdot Mw(iv) \cdot x(C)] / [x(ii) \cdot x(B) + x(iv) \cdot x(C)],$$

wobei

Mw(ii) das mittlere Molekulargewicht Mw, gemessen mittels Gelpermeationschromatographie in Tetrahydrofuran gegen Polystyrol als Standard, der Vinylcopolymerisat-Matrix (ii) in Komponente B ist,
x(B) der Anteil der Komponente B in Gew.-% in der Zusammensetzung ist,
Mw(iv) das mittlere Molekulargewicht Mw, gemessen mittels Gelpermeationschromatographie in Tetrahydrofuran gegen Polystyrol als Standard, der Vinylcopolymerisat-Matrix (iv) in Komponente C ist und
x(C) der Anteil der Komponente C in Gew.-% in der Zusammensetzung ist.

Bevorzugt liegt das gemittelte Molekulargewicht gMw im Bereich von 125 bis 160 kg/mol, weiter bevorzugt im Bereich 135 bis 155 kg/mol, besonders bevorzugt im Bereich von 140 bis 150 kg/mol.

Die disperse Phase (i) in der Komponente B und die disperse Phase (iii) in der Komponente C weisen bevorzugt die oben genannten mittleren Teilchendurchmesser D50 auf. Weiter bevorzugt weist mindestens einer der beiden dispersen Phasen (i) und (iii) einen mittleren Durchmesser D50 gemessen per Ultrazentrifugation von 0,7 bis 1,5 μm auf.

**Komponente D**

Als Komponente D kann die erfindungsgemäße Zusammensetzung ein oder mehrere Polymeradditive enthalten, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, weiteren von Komponenten B und C verschiedenen Schlagzähigkeitsmodifikatoren (sowohl mit als auch ohne Kern-Schale-Struktur, z.B. Methylmethacrylat-Butadien-Styrol Copolymere mit Kern-Schale-Struktur (MBS) hergestellt durch Emulsionspolymerisation), weiteren von Komponenten A, B und C verschiedenen polymeren Bestandteilen (beispielsweise funktionelle Blendpartnern), Füll- und Verstärkungsstoffen sowie Farbstoffen und Pigmenten.

In bevorzugter Ausführungsform enthält die Zusammensetzung keine Füll- und Verstärkungsstoffe.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, weiteren Schlagzähigkeitsmodifikatoren, weiteren polymeren Bestandteilen, Farbstoffen und Pigmenten.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten und Schwefel-basierten Co-Stabilisatoren.

In besonders bevorzugter Ausführungsform enthält die Zusammensetzung als Stabilisator mindestens einen Vertreter ausgewählt aus der Gruppe bestehend aus Octadecyl-3-(3,5-di-tert-butyl-4-hydroxyphenyl)propionat und Tris(2,4-di-tert-butylphenyl)phosphit.

In besonders bevorzugter Ausführungsform enthält die Zusammensetzung als Komponente D mindestens einen Vertreter ausgewählt aus der Gruppe bestehend aus Gleit- und Entformungsmitteln, Stabilisatoren, Fließfähigkeitspromotoren sowie Farbstoffen und Pigmenten und ist frei von weiteren Polymeradditiven gemäß Komponente D.

In einer weiter bevorzugten Ausführungsform enthält die Zusammensetzung als Komponente D mindestens ein Entformungsmittel, mindestens einen Stabilisator und optional mindestens einen Farbstoff und/oder ein Pigment und ist frei von weiteren Polymeradditiven gemäß Komponente D.

Enthält die Zusammensetzung als Komponente D oder als Bestandteil der Komponente D ein Pfropfpolymerisat hergestellt durch Emulsionspolymerisation, so wird dieses in einem Gewichtsanteil eingesetzt, der bevorzugt 15 % der Summe der Gewichtsanteile an Komponenten B und C, weiter bevorzugt 10 % der Summe der Gewichtsanteile an Komponenten B und C, besonders bevorzugt 7 Gew.-% der Summe der Gewichtsanteile an Komponenten B und C nicht überschreitet.

Weiter bevorzugt enthält die Zusammensetzung als Komponente D Pfropfpolymerisat hergestellt durch Emulsionspolymerisation in einer Menge von maximal 6 Gew.-%, bevorzugt maximal 4 Gew.-%, weiter bevorzugt maximal 2 Gew.-% . In am stärksten bevorzugter Ausführungsform ist die Zusammensetzung frei von jeglichen Pfropfpolymerisaten und anderen Polymerisaten hergestellt in Emulsionspolymerisation.

**Herstellung der Formmassen und Formkörper**

Aus den erfindungsgemäßen Zusammensetzungen können thermoplastische Formmassen hergestellt werden. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 310°C, ganz besonders bevorzugt bei 260°C bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 41 der vorliegenden Erfindung beschrieben:

1. Zusammensetzung zur Erzeugung einer thermoplastischen Formmasse, wobei die Zusammensetzung die folgenden Bestandteile enthält oder hieraus besteht:

A) mindestens ein Polymer ausgewählt aus der Gruppe bestehend aus Polycarbonatund Polyestercarbonat,
B) kautschukmodifiziertes Vinylcopolymerisat aus

B.1) 80 bis 95 Gew.-%, bezogen auf das kautschukmodifizierte Vinylcopolymerisat B, Struktureinheiten abgeleitet von

B.1.1) 60 bis 90 Gew.-%, bezogen auf die Komponente B.1, Styrol
B.1.2) 10 bis 40 Gew.-%, bezogen auf die Komponente B.1, Acrylnitril

B.2) 5 bis 20 Gew.-%, bezogen auf das kautschukmodifizierte Vinylcopolymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinylcopolymerisat B

(i) eine disperse Phase bestehend aus

(i.1) mit Vinylcopolymerisat aus Struktureinheiten gemäß B.1 gepfropften Kautschukpartikeln und
(i.2) in den Kautschukpartikeln als separierte disperse Phase eingeschlossenes Vinylcopolymerisat ebenfalls aus Struktureinheiten gemäß B.1
und

(ii) eine nicht an die Kautschukpartikel gebundene und nicht in diese Kautschukpartikel eingeschlossene kautschukfreie Vinylcopolymerisat-Matrix bestehend aus Struktureinheiten gemäß B.1

enthält,

C) kautschukmodifiziertes Vinylcopolymerisat aus

C.1) 80 bis 95 Gew.-%, bezogen auf das kautschukmodifizierte Vinylcopolymerisat C, Struktureinheiten abgeleitet von

C.1.1) 60 bis 85 Gew.-%, bezogen auf die Komponente C.1, Styrol
C.1.2) 10 bis 35 Gew.-%, bezogen auf die Komponente C.1, Acrylnitril
C.1.3) 0,5 bis 15 Gew.-%, bezogen auf die Komponente C.1, mindestens einem (Meth)acrylsäure-Alkylester,

C.2) 5 bis 20 Gew.-%, bezogen auf das kautschukmodifizierte Vinylcopolymerisat C, einer oder mehrerer kautschukelastischer Pfropfgrundlagen mit Glasübergangstemperaturen < -50°C enthaltend mindestens 50 Gew.-%, bezogen auf C.2, an vom 1,3-Butadien abgeleiteten Struktureinheiten,

wobei das kautschukmodifizierte Vinylcopolymerisat C

(iii) eine disperse Phase bestehend aus

(iii.1) mit Vinylcopolymerisat aus Struktureinheiten gemäß C.1 gepfropften Kautschukpartikeln und
(iii.2) in den Kautschukpartikeln als separierte disperse Phase eingeschlossenes Vinylcopolymerisat ebenfalls aus Struktureinheiten gemäß C. 1
und

(iv) eine nicht an die Kautschukpartikel gebundene und nicht in diese Kautschukpartikel eingeschlossene kautschukfreie Vinylcopolymerisat-Matrix bestehend aus Struktureinheiten gemäß C. 1

enthält,

wobei das Gewichtsverhältnis der Komponenten B und C im Bereich von 20:80 bis 90:10 liegt.

2. Zusammensetzung gemäß Ausführungsform 1, wobei Komponente A ausgewählt ist aus der Gruppe bestehend aus aromatischem Polycarbonat und aromatischem Polyestercarbonat.

3. Zusammensetzung gemäß Ausführungsform 2, wobei als Komponente A aromatisches Polycarbonat auf Basis Bisphenol A zum Einsatz kommt.

4. Zusammensetzung gemäß einer der vorherigen Ausführungsformen, wobei die Komponente A ein mittleres Molekulargewicht Mw bestimmt durch Gelpermeationschromatographie in Methylenchlorid mit Polycarbonat als Standard von 23.000 g/mol bis 33.000 g/mol aufweist.

5. Zusammensetzung gemäß einer der vorherigen Ausführungsformen, wobei die Komponente B die nicht an die Kautschukpartikel gebundene und nicht in diese Kautschukpartikel eingeschlossene kautschukfreie Vinylcopolymerisat-Matrix (ii) bestehend aus Struktureinheiten gemäß B.1 in einem Anteil x(ii) von 60 bis 95 Gew.-%, bezogen auf B, enthält und
die Komponente C die nicht an die Kautschukpartikel gebundene und nicht in diese Kautschukpartikel eingeschlossene kautschukfreie Vinylcopolymerisat-Matrix (iv) bestehend aus Struktureinheiten gemäß C.1 in einem Anteil x(iv) von 60 bis 95 Gew.-%, bezogen auf C, enthält.

6. Zusammensetzung gemäß Ausführungsform 5, wobei das gemittelte Molekulargewicht gMw gemäß

$$gMw = [x(ii) \cdot Mw(ii) \cdot x(B) + x(iv) \cdot Mw(iv) \cdot x(C)] / [x(ii) \cdot x(B) + x(iv) \cdot x(C)]$$

im Bereich von 125 bis 160 kg/mol liegt,
wobei:

Mw(ii) das mittlere Molekulargewicht Mw, gemessen mittels Gelpermeationschromatographie in Tetrahydrofuran gegen Polystyrol als Standard, der Vinylcopolymerisat-Matrix (ii) in Komponente B ist,
x(B) der Anteil der Komponente B in Gew.-% in der Zusammensetzung ist,
Mw(iv) das mittlere Molekulargewicht Mw, gemessen mittels Gelpermeationschromatographie in Tetrahydrofuran gegen Polystyrol als Standard, der Vinylcopolymerisat-Matrix (iv) in Komponente C ist und
x(C) der Anteil der Komponente C in Gew.-% in der Zusammensetzung ist.

7. Zusammensetzung gemäß Ausführungsform 6, wobei gMw im Bereich von 135 bis 155 kg/mol liegt.

8. Zusammensettzung gemäß Ausführungsform 6, wobei gMw im Bereich von 140 bis 150 kg/mol liegt.

9. Zusammensetzung gemäß einer der vorherigen Ausführungsformen, wobei die Vinylcopolymerisat-Matrix gemäß (ii) ein mittleres Molekulargewicht Mw gemessen mittels Gelpermeationschromatographie in Tetrahydrofuran gegen Polystyrol als Standard von 140 bis 200 kg/mol aufweist.

10. Zusammensetzung gemäß einer der vorherigen Ausführungsformen, wobei die Vinylcopolymerisat-Matrix gemäß (ii) ein mittleres Molekulargewicht Mw gemessen mittels Gelpermeationschromatographie in Tetrahydrofuran gegen Polystyrol als Standard von 150 bis 180 kg/mol aufweist.

11. Zusammensetzung gemäß einer der vorherigen Ausführungsformen, wobei die Vinylcopolymerisat-Matrix gemäß (iv) ein mittleres Molekulargewicht Mw gemessen mittels Gelpermeationschromatographie in Tetrahydrofuran gegen Polystyrol als Standard von 110 bis 130 kg/mol aufweist.

12. Zusammensetzung gemäß einer der vorherigen Ausführungsformen, wobei die Komponente C.1.3 ausgewählt ist aus der Gruppe bestehend aus Methylmethacrylat, Ethylmethacrylat, n-Butylacrylat und tert.-Butylacrylat.

13. Zusammensetzung gemäß einer der vorherigen Ausführungsformen, wobei die Komponente C.1.3 n-Butylacrylat ist.

14. Zusammensetzung gemäß einer der vorherigen Ausführungsformen, wobei

C.1.1) in einer Menge von 65 bis 80 Gew.-%, bezogen auf die Komponente C.1,
C.1.2) in einer Menge von 15 bis 30 Gew.-%, bezogen auf die Komponente C.1,
C.1.3) in einer Menge von 2 bis 8 Gew.-%, bezogen auf die Komponente C.1,

enthalten sind.

15. Zusammensetzung gemäß einer der vorherigen Ausführungsformen, wobei

C.1.1) in einer Menge von 67 bis 75 Gew.-%, bezogen auf die Komponente C.1,
C.1.2) in einer Menge von 20 bis 28 Gew.-%, bezogen auf die Komponente C.1,
C.1.3) in einer Menge von 3 bis 6 Gew.-%, bezogen auf die Komponente C.1,

enthalten sind.

16. Zusammensetzung gemäß einer der vorherigen Ausführungsformen, enthaltend 55-75 Gew.-% der Komponente A.

17. Zusammensetzung gemäß einer der vorherigen Ausführungsformen, enthaltend 15-35 Gew.-% der Komponente B.

18. Zusammensetzung gemäß einer der vorherigen Ausführungsformen, enthaltend 6-15 Gew.-% der Komponente C.

19. Zusammensetzung gemäß einer der vorherigen Ausführungsformen 1 bis 15, enthaltend

30-90 Gew.-% der Komponente A,
5-50 Gew.-% der Komponente B,
3-40 Gew.-% der Komponente C,
0-20 Gew.-% Polymeradditive als weitere Komponente D.

20. Zusammensetzung gemäß einer der vorherigen Ausführungsformen 1 bis 15, enthaltend

40-80 Gew.-% der Komponente A,
10-40 Gew.-% der Komponente B,
5-30 Gew.-% der Komponente C,
0,1-10 Gew.-% Polymeradditive als weitere Komponente D.

21. Zusammensetzung gemäß einer der vorherigen Ausführungsformen, enthaltend
0,2-5 Gew.-% der Komponente D.

22. Zusammensetzung gemäß einer der vorherigen Ausführungsformen, enthaltend

55-75 Gew.-% der Komponente A,

15-35 Gew.-% der Komponente B,
6-15 Gew.-% der Komponente C,
0,2-5 Gew.-% Polymeradditive als weitere Komponente D.

23. Zusammensetzung gemäß einer der vorherigen Ausführungsformen, enthaltend 1,5 bis 7,5 Gew.-% an von 1,3-Butadien abgeleiteten Struktureinheiten.

24. Zusammensetzung gemäß einer der vorherigen Ausführungsformen, enthaltend 2,0 bis 6,0 Gew.-% an von 1,3-Butadien abgeleiteten Struktureinheiten.

25. Zusammensetzung gemäß einer der vorherigen Ausführungsformen, enthaltend 2,5 bis 4,5 Gew.-% an von 1,3-Butadien abgeleiteten Struktureinheiten.

26. Zusammensetzung gemäß einer der vorherigen Ausführungsformen, wobei die Komponenten B und C in einem Gewichtsverhältnis von 40:60 bis 85:15 enthalten sind.

27. Zusammensetzung gemäß einer der vorherigen Ausführungsformen, wobei die Komponenten B und C in einem Gewichtsverhältnis von 60:40 bis 80:20 enthalten sind.

28. Zusammensetzung gemäß einer der vorherigen Ausführungsformen, wobei die disperse Phase (i) der Komponente B einen mittleren Durchmesser D50 gemessen per Ultrazentrifugation von 0,3 bis 2,0 $\mu$m aufweist und wobei die disperse Phase (iii) der Komponente C einen mittleren Durchmesser D50 gemessen per Ultrazentrifugation von 0,3 bis 2,0 $\mu$m aufweist.

29. Zusammensetzung gemäß einer der vorherigen Ausführungsformen, wobei mindestens einer der beiden dispersen Phasen (i) und (iii) einen mittleren Durchmesser D50 gemessen per Ultrazentrifugation von 0,7 bis 1,5 $\mu$m aufweist.

30. Zusammensetzung gemäß einer der vorherigen Ausführungsformen, wobei die Komponenten B und C frei sind von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten.

31. Zusammensetzung gemäß einer der vorherigen Ausführungsformen, wobei die Komponenten B und C jeweils weniger als 20 ppm Ionen von Alkalimetallen und Erdalkalimetallen enthalten.

32. Zusammensetzung gemäß einer der vorherigen Ausführungsformen, wobei die Komponenten B und C jeweils durch Masse-Polymerisation hergestellt werden.

33. Zusammensetzungen gemäß einer der vorherigen Ausführungsformen, wobei die Komponenten B.2 und C.2 nur aus von 1,3-Butadien abgeleiteten Struktureinheiten bestehen.

34. Zusammensetzung gemäß einer der vorherigen Ausführungsformen, wobei die Komponenten B und C jeweils einen Gehalt an von 1,3-Butadien abgeleiteten Struktureinheiten von 8 bis 12 Gew.- % aufweisen.

35. Zusammensetzung gemäß einer der vorherigen Ausführungsformen, enthaltend als Komponente D mindestens ein Additiv ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren, Fließfähigkeitspromotoren, Phasenverträglichkeitsvermittlern, weiteren von Komponenten B und C verschiedenen Schlagzähigkeitsmodifikatoren, weiteren von Komponenten A, B und C verschiedenen polymeren Bestandteilen, Füll- und Verstärkungsstoffen sowie Farbstoffen und Pigmenten.

36. Zusammensetzung gemäß einer der vorherigen Ausführungsformen, enthaltend als Komponente D mindestens ein Additiv ausgewählt aus der Gruppe bestehend aus Flammschutzmitteln, Gleit- und Entformungsmitteln, Stabilisatoren, Fließfähigkeitspromotoren, Verträglichkeitsvermittlern sowie Farbstoffen und Pigmenten.

37. Zusammensetzung gemäß einer der vorherigen Ausführungsformen, wobei die Zusammensetzung kein weiteres Pfropfpolymerisat hergestellt durch Emulsionspolymerisation enthält.

38. Zusammensetzung gemäß einer der vorherigen Ausführungsformen, bestehend zu mindestens 90 Gew.-% aus den Komponenten A bis D.

39. Zusammensetzung gemäß einer der vorherigen Ausführungsformen, bestehend aus den Komponenten A bis D.

40. Formmasse hergestellt aus einer Zusammensetzung nach einer der Ausführungsformen 1 bis 39.

41. Formkörper, erhältlich aus einer Zusammensetzung nach einer der Ausführungsformen 1 bis 39 oder aus einer Formmasse gemäß Ausführungsform 40.

Beispiele

Komponente A:

Lineares Polycarbonat auf Basis Bisphenol-A mit einem gewichtsgemittelten Molekulargewicht $M_w$ von 30.000 g/mol (bestimmt durch GPC bei Raumtemperatur in Methylenchlorid als Lösungsmittel gegen einen BPA-PC-Standard).

**Komponente B-1:**

Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf reinem Polybutadienkautschuk als Pfropfgrundlage enthaltend Inklusionen aus Styrol-Acrylnitril-Copolymerisat und eine nicht an den Kautschuk gebundene Styrol-Acrylnitril-Copolymerisat-Matrix enthält. Komponente B-1 weist ein A:B:S-Verhältnis von 23:9:68 Gew.-% und einen Gelgehalt, bestimmt als in Aceton unlöslicher Anteil, von 20 Gew.-% auf. Das in Tetrahydrofuran lösliche Styrol-Acrylnitril-Copolymer in Komponente B-1 liegt damit in einem Anteil x(ii) von 80 Gew.-% vor und weist ein gewichtsgemitteltes Molekulargewicht $M_w$ (gemessen per GPC in Tetrahydrofuran als Lösungsmittel mit Polystyrol als Standard) von 160 kg/mol auf. Die mittlere Partikelgröße der dispersen Phase D50, gemessen per Ultrazentrifugation, beträgt 0,9 $\mu$m. Die Schmelzeflussrate (MFR) der Komponente B-1, gemessen nach ISO 1133 (Version von 2012) bei 220°C mit einer Stempellast von 10 kg, beträgt 6,5 g/10 min.

**Komponente B-2:**

Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf einem Styrol-Butadien-Blockcopolymerkautschuk mit einem Butadiengehalt von 75 Gew.-% enthaltend Inklusionen aus Styrol-Acrylnitril-Copolymerisat und eine nicht an den Kautschuk gebundene Styrol-Acrylnitril-Copolymerisat-Matrix enthält. Komponente B-2 weist ein A:B:S-Verhältnis von 22:10:68 Gew.-% und einen Gelgehalt, bestimmt als in Aceton unlöslicher Anteil, von 19 Gew.-% auf. Das in Tetrahydrofuran lösliche Styrol-Acrylnitril-Copolymer in Komponente B-2 liegt damit in einem Anteil x(ii) von 81 Gew.-% vor und weist ein gewichtsgemitteltes Molekulargewicht $M_w$ (gemessen per GPC in Tetrahydrofuran als Lösungsmittel mit Polystyrol als Standard) von 110 kg/mol auf. Die Schmelzeflussrate (MFR) der Komponente B-2, gemessen nach ISO 1133 (Version von 2012) bei 220°C mit einer Stempellast von 10 kg, beträgt 30 g/10 min.

**Komponente C-1:**

Acrylnitril(A)-Butadien(B)-Styrol(S)-n-Butylacrylat(BA)-Polymer, hergestellt im Masse-Polymerisationsverfahren, welches eine disperse Phase aus mit Styrol-Acrylnitril-n-Butylacrylat-Copolymerisat gepfropften Kautschukpartikeln basierend auf reinem Polybutdienkautschuk als Pfropfgrundlage enthaltend Inklusionen aus Styrol-Acrylnitril-n-Butylacrylat-Copolymerisat und eine nicht an den Kautschuk gebundene Styrol-Acrylnitril-n-Butylacrylat-Copolymerisat-Matrix enthält. Komponente C-1 weist ein A:B:S:BA-Verhältnis von 22,5:10:63:4,5 Gew.-% und einen Gelgehalt, bestimmt als in Aceton unlöslicher Anteil, von 19 Gew.-% auf. Das in Tetrahydrofuran lösliche Styrol-Acrylnitril-n-Butylacrylat-Copolymer in Komponente C-1 liegt damit in einem Anteil x(iv) von 81 Gew.-% vor und weist ein gewichtsgemitteltes Molekulargewicht $M_w$ (gemessen per GPC in Tetrahydrofuran als Lösungsmittel mit Polystyrol als Standard) von 115 kg/mol auf. Die mittlere Partikelgröße der dispersen Phase D50, gemessen per Ultrazentrifugation, beträgt 0,5 $\mu$m. Die Schmelzeflussrate (MFR) der Komponente C-1, gemessen nach ISO 1133 (Version von 2012) bei 220°C mit einer Stempellast von 10 kg, beträgt 28 g/10 min.

**Komponente D-1:**

Pentaerythrittetrastearat

**Komponente D-2:**

Irganox™ B900 (BASF, Ludwigshafen, Deutschland)
Mischung aus 80 Gew.-% Tris(2,4-di-tert.-butyl-phenyl)-phospit (Irgafos™ 168)und 20 Gew.-% 2,6-Di-tert.-butyl-4-(octadecanoxycarbonylethyl)phenol (Irganox™ 1076)

**Herstellung und Prüfung der erfindungsgemäßen Formmassen**

Das Mischen der Komponenten erfolgte auf einem Zweiwellenextruder ZSK25 der Fa. Coperion, Werner & Pfleiderer (Stuttgart, Deutschland) bei einer Massetemperatur von 260°C und unter Anlegen eines Unterdrucks von 100 mbar (absolut). Die Formkörper wurden bei 260°C bzw. 300°C Massetemperatur und bei einer Werkzeugtemperatur von 80°C auf einer Spritzgießmaschine Typ Arburg 270 E hergestellt.

Die Kerbschlagzähigkeit nach IZOD wurde bestimmt bei -30°C gemäß ISO 180-1A (Version von 1982) an jeweils zehn Prüfkörpern der Abmessung 80 mm × 10 mm × 4mm und wird als Mittelwert von zehn Einzelmessungen angegeben.

Die Bruchdehnung wurde gemäß ISO 527 (Version von 1996) bei Raumtemperatur bestimmt.

Als Maß für die thermische Verarbeitungsstabilität diente der Erhalt der Tieftemperaturduktilität gemessen an Prüfkörpern der Dimension von 60 mm × 60 mm × 2 mm, welche bei einer erhöhten Massetemperatur von 300°C im Spritzguss hergestellt wurden mit dem Ziel, besonders kritische thermische Verarbeitungsbedingungen zu simulieren. Die Tieftemperaturduktilität wurde bei -30°C an jeweils zehn so hergestellten Prüfkörpern im Durchstoßversuch gemäß ISO 6603-2 (Version von April 2002) mit Schmierung der Prüfkörper ermittelt. Als Beurteilungsmaß für die Tieftemperaturduktilität diente dabei der Anteil der Einzelprüfungen resultierend in einem Bruchbild ohne Rissbildung oder mit stabiler Rissbildung, d.h. mit einer Beurteilung des Schädigungsbruchbildes von "YD" (Fließen mit anschließendem Tiefziehen, Bild 1 in der ISO 6603-2) oder "YS" (Fließen mit anschließender mindestens teilweiser stabiler Rissbildung, Bild 2 in der ISO 6603-2) gemäß der Ausführungen in §3.10 in der ISO 6603-2 (Version von April 2002).

Die Schmelzeviskosität als Maß für die Schmelzefließfähigkeit wurde gemäß ISO 11443 (Version von 2014) bei einer Temperatur von 260°C und einer Scherrate von 1000 $s^{-1}$ ermittelt.

Als Maß für die Chemikalienbeständigkeit diente die Spannungsrissbeständigkeit (ESC) in Rapsöl. Bestimmt wurde die Zeit bis zum spannungsrissinduzierten Bruchversagen eines bei einer Massetemperatur von 260°C spritzgegossenen Prüfkörpers der Abmessung 80 mm x 40 mm x 4 mm bei Raumtemperatur, wobei der Prüfkörper mittels einer Spannschablone mit einer externen Randfaserdehnung von 2,4 % beaufschlagt und vollständig in das Rapsöl eingetaucht wurde. Die Messung erfolgte gemäß DIN EN ISO 22088 (Version von 2006). Die Messung wurde nach 7 Tagen (168 h) abgebrochen, sofern in dieser Zeit kein Bruchversagen resultierte (Messwert wird in diesem Fall als >168 h angegeben).

Der Oberflächenglanzgrad wurde gemessen in Reflexion unter einem Betrachtungswinkel von 60° mit einem Glanzmessgerät vom Typ Haze-Gloss von BYK-Gardner GmbH (Geretsried, Deutschland) nach DIN 67530 (Version von 1982) an Prüfkörpern der Abmessung 60 mm x 60 mm x 2 mm, welche bei einer Massetemperatur von 300°C spritzgegossen wurden. Es wurde ein hochglanzpoliertes Spritzgusswerkzeug zur Herstellung dieser Prüfkörper verwendet.

In den Tabellen 1 und 2 sind erfindungsgemäße Zusammensetzungen und Vergleichszusammensetzungen und die Eigenschaften der aus ihnen hergestellten Formkörper zusammengefasst. Dabei sind in Tabelle 1 solche Zusammensetzungen aufgeführt, die aufgrund eines PC:ABS-Verhältnisses von 70:30 Gew.-Teilen eine Wärmformbeständigkeit gemäß Vicat B/120 bestimmt gemäß ISO 306 (Version von 2013) an Prüfkörpern der Abmessung 80 mm x 10 mm x 4 mm mit einer Stempellast von 50 N und mit einer Aufheizgeschwindigkeit von 120°C/h im Bereich von 129°C +/- 2°C aufweisen. In Tabelle 1 sind solche Zusammensetzungen mit einem PC:ABS-Verhältnis von 60:40 Gew.-Teilen und einem Vicat B/120 im Bereich von 120°C +/- 5°C zusammengefasst. Aufgrund der unterschiedlichen Wärmeformbeständigkeiten eignen sich die Zusammensetzungen in Tabellen 1 und 2 für unterschiedliche Anwendungen und decken somit unterschiedliche von der Automobilindustrie spezifizierte Materialklassen ab.

**Tabelle 1**

| | **V1** | **2** | **3** | **4** |
|---|---|---|---|---|
| **Einsatzstoff** | **Gew.-Teile** | **Gew.-Teile** | **Gew.-Teile** | **Gew.-Teile** |
| A | 70 | 70 | 70 | 70 |
| B-1 | 30 | 22,5 | 15 | 7,5 |
| C-1 | | 7,5 | 15 | 22,5 |
| D-1 | 0,75 | 0,75 | 0,75 | 0,75 |
| D-2 | 0,10 | 0,10 | 0,10 | 0,10 |
| **Gemitteltes Molekulargewicht gMw** [kg/mol] | 160 | 149 | 137 | 126 |
| **Prüfung** | | | | |
| Kerbschlagzähigkeit (-30°C) [kJ/m$^2$] | 47 | 49 | 43 | 29 |
| Bruchdehnung [%] | | 121 | | |
| Durchstoßversuch (300°C/-30°C) Anteil der Prüfungen resultierend in Bruchbild mit stabiler Rissbildung [%] | 0 | 50 | 60 | 40 |
| Schmelzeviskosität [kJ/m$^2$] | 238 | 228 | 219 | 211 |
| ESC (Zeit bis Bruch in Rapsöl) [h] | 29 | 32 | 27 | 24 |
| Glanzgrad (300°C/60°) | 89 | 92 | 93 | 92 |

**Tabelle 2**

| | V5 | 6 | 7 | 8 | V9 | V10 | V11 |
|---|---|---|---|---|---|---|---|
| **Einsatzstoff** | **Gew.-Teile** | **Gew.-Teile** | **Gew.-Teile** | **Gew.-Teile** | **Gew.-Teile** | **Gew.-Teile** | **Gew.-Teile** |
| A | 60 | 60 | 60 | 60 | 60 | 60 | 60 |
| B-1 | 40 | 30 | 20 | 10 | | 30 | 20 |
| B-2 | | | | | | 10 | 20 |
| C-1 | | 10 | 20 | 30 | 40 | | |
| D-1 | 0,75 | 0,75 | 0,75 | 0,75 | 0,75 | 0,75 | 0,75 |
| D-2 | 0,10 | 0,10 | 0,10 | 0,10 | 0,10 | 0,10 | 0,10 |
| **Gemitteltes Molekulargewicht gMw** [kg/mol] | 160 | 149 | 137 | 126 | 115 | 147 | 135 |
| **Prüfung** | | | | | | | |
| Kerbschlagzähigkeit (-30°C) [$kJ/m^2$] | 59 | 57 | 48 | 35 | 17 | | |
| Bruchdehnung [%] | | 129 | | | | 99 | |
| Durchstoßversuch (300°C/-30°C) Anteil der Prüfungen resultierend in Bruchbild mit stabiler Rissbildung [%] | 100 | 100 | 90 | 10 | 0 | 90 | 100 |
| Schmelzeviskosität [$kJ/m^2$] | 209 | 196 | 185 | 168 | 153 | 202 | 199 |
| ESC (Zeit bis Bruch in Rapsöl) [h] | >168 | >168 | >168 | >168 | >168 | >168 | >168 |
| Glanzgrad (300°C/60°) | 88 | 90 | 92 | 91 | 89 | 87 | 86 |

Die Daten in Tabellen 1 und 2 zeigen, dass die erfindungsgemäßen Zusammensetzungen 2 bis 4 gegenüber der Vergleichszusammensetzung V1 sowie die erfindungsgemäßen Zusammensetzungen 6 bis 8 gegenüber den Vergleichszusammensetzungen V5 und V9 bis V11 überraschenderweise einen erhöhten Glanzgrad aufweisen und somit die erfindungsgemäße Aufgabe erfüllen.

Weiterhin zeigen die Daten, dass die erfindungsgemäße Zusammensetzung 6 gegenüber der Vergleichszusammensetzung V10 eine verbesserte Bruchdehnung und die erfindungsgemäßen Zusammensetzungen 6 und 7 gegenüber den vergleichbaren Vergleichszusammensetzungen V10 und V11 eine verbesserte Fließfähigkeit aufweisen. Diese Verbesserungen gehen nicht mit einer Verschlechterung von Verarbeitungsstabilität, Tieftemperaturduktilität und Chemikalienbeständigkeit einher, so dass die erfindungsgemäßen Zusammensetzungen gegenüber den Vergleichszusammensetzungen nicht nur einen verbesserten Glanzgrad aufweisen, sondern darüber hinaus auch eine verbesserte Balance aus Schmelzefließfähigkeit, Chemikalien(Spannungsriss)-beständigkeit, Tieftemperaturduktilität, Bruchdehnung und Verarbeitungsstabilität.

Die erfindungsgemäßen Zusammensetzungen 2 bis 4 sowie 6 bis 8 zeigen zwar allesamt eine Verbesserung des Glanzgrades und erfüllen somit die erfindungsgemäße Hauptaufgabe, allerdings erweisen sich die Zusammensetzungen 2 und 3 gegenüber 4 und weiterhin die Zusammensetzung 2 gegenüber 3 sowie die Zusammensetzungen 6 und 7 gegenüber 8 und weiterhin die Zusammensetzung 6 gegenüber 7 als bevorzugt im Hinblick auf ihre Balance aus Tieftemperaturduktilität und Chemikalien(Spannungsriss)-beständigkeit.

## Patentansprüche

**1.** Zusammensetzung zur Erzeugung einer thermoplastischen Formmasse, wobei die Zusammensetzung die folgenden Bestandteile enthält oder hieraus besteht:

A) mindestens ein Polymer ausgewählt aus der Gruppe bestehend aus Polycarbonat und Polyestercarbonat,
B) kautschukmodifiziertes Vinylcopolymerisat aus

B.1) 80 bis 95 Gew.-%, bezogen auf das kautschukmodifizierte Vinylcopolymerisat B, Struktureinheiten abgeleitet von

B.1.1) 60 bis 90 Gew.-%, bezogen auf die Komponente B.1, Styrol
B.1.2) 10 bis 40 Gew.-%, bezogen auf die Komponente B.1, Acrylnitril

B.2) 5 bis 20 Gew.-%, bezogen auf das kautschukmodifizierte Vinylcopolymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinylcopolymerisat B

(i) eine disperse Phase bestehend aus

(i.1) mit Vinylcopolymerisat aus Struktureinheiten gemäß B.1 gepfropften Kautschukpartikeln und
(i.2) in den Kautschukpartikeln als separierte disperse Phase eingeschlossenes Vinylcopolymerisat ebenfalls aus Struktureinheiten gemäß B.1
und

(ii) eine nicht an die Kautschukpartikel gebundene und nicht in diese Kautschukpartikel eingeschlossene kautschukfreie Vinylcopolymerisat-Matrix bestehend aus Struktureinheiten gemäß B.1

enthält,

C) kautschukmodifiziertes Vinylcopolymerisat aus

C.1) 80 bis 95 Gew.-%, bezogen auf das kautschukmodifizierte Vinylcopolymerisat C, Struktureinheiten abgeleitet von

C.1.1) 60 bis 85 Gew.-%, bezogen auf die Komponente C.1, Styrol
C.1.2) 10 bis 35 Gew.-%, bezogen auf die Komponente C.1, Acrylnitril
C.1.3) 0,5 bis 15 Gew.-%, bezogen auf die Komponente C.1, mindestens einem (Meth)acrylsäure-Alkylester,

C.2) 5 bis 20 Gew.-%, bezogen auf das kautschukmodifizierte Vinylcopolymerisat C, einer oder mehrerer kautschukelastischer Pfropfgrundlagen mit Glasübergangstemperaturen < -50°C enthaltend mindestens 50 Gew.-%, bezogen auf C.2, an vom 1,3-Butadien abgeleiteten Struktureinheiten,
wobei das kautschukmodifizierte Vinylcopolymerisat C

(iii) eine disperse Phase bestehend aus

(iii.1) mit Vinylcopolymerisat aus Struktureinheiten gemäß C.1 gepfropften Kautschukpartikeln und
(iii.2) in den Kautschukpartikeln als separierte disperse Phase eingeschlossenes Vinylcopolymerisat ebenfalls aus Struktureinheiten gemäß C.1
und

(iv) eine nicht an die Kautschukpartikel gebundene und nicht in diese Kautschukpartikel eingeschlossene kautschukfreie Vinylcopolymerisat-Matrix bestehend aus Struktureinheiten gemäß C.1

enthält,

wobei das Gewichtsverhältnis der Komponenten B und C im Bereich von 20:80 bis 90:10 liegt.

2. Zusammensetzung gemäß Anspruch 1, wobei die Komponenten B und C jeweils durch Masse-Polymerisation hergestellt werden.

3. Zusammensetzung gemäß Anspruch 1 oder 2, wobei die Komponente B die nicht an die Kautschukpartikel gebundene und nicht in diese Kautschukpartikel eingeschlossene kautschukfreie Vinylcopolymerisat-Matrix (ii) bestehend aus Struktureinheiten gemäß B.1 in einem Anteil x(ii) von 60 bis 95 Gew.-%, bezogen auf B, enthält und
die Komponente C die nicht an die Kautschukpartikel gebundene und nicht in diese Kautschukpartikel eingeschlossene kautschukfreie Vinylcopolymerisat-Matrix (iv) bestehend aus Struktureinheiten gemäß C.1 in einem Anteil x(iv) von 60 bis 95 Gew.-%, bezogen auf C, enthält.

4. Zusammensetzung gemäß Anspruch 3, wobei das gemittelte Molekulargewicht gMw gemäß

$$gMw = [x(ii) \cdot Mw(ii) \cdot x(B) + x(iv) \cdot Mw(iv) \cdot x(C)] / [x(ii) \cdot x(B) + x(iv) \cdot x(C)]$$

im Bereich von 125 bis 160 kDa liegt,
wobei

Mw(ii) das mittlere Molekulargewicht Mw, gemessen mittels Gelpermeationschromatographie in Tetrahydrofuran gegen Polystyrol als Standard, der Vinylcopolymerisat-Matrix (ii) in Komponente B ist,
x(B) der Anteil der Komponente B in Gew.-% in der Zusammensetzung ist,
Mw(iv) das mittlere Molekulargewicht Mw, gemessen mittels Gelpermeationschromatographie in Tetrahydrofuran gegen Polystyrol als Standard, der Vinylcopolymerisat-Matrix (iv) in Komponente C ist und
x(C) der Anteil der Komponente C in Gew.-% in der Zusammensetzung ist.

5. Zusammensetzung gemäß einem der vorherigen Ansprüche, wobei die Vinylcopolymerisat-Matrix gemäß (ii) ein mittleres Molekulargewicht Mw gemessen mittels Gelpermeationschromatographie in Tetrahydrofuran gegen Polystyrol als Standard von 140 bis 200 kg/mol aufweist und wobei die Vinylcopolymerisat-Matrix gemäß (iv) ein mittleres Molekulargewicht Mw gemessen mittels Gelpermeationschromatographie in Tetrahydrofuran gegen Polystyrol als Standard von 110 bis 130 kg/mol aufweist.

6. Zusammensetzung gemäß einem der vorherigen Ansprüche, wobei die Komponente C.1.3 n-Butylacrylat ist.

7. Zusammensetzung gemäß einem der vorherigen Ansprüche, enthaltend

30-90 Gew.-% der Komponente A,
5-50 Gew.-% der Komponente B,

3-40 Gew.-% der Komponente C,
0-20 Gew.-% Polymeradditive als weitere Komponente D.

**8.** Zusammensetzung gemäß einem der vorherigen Ansprüche, enthaltend 1,5 bis 7,5 Gew.-% an von 1,3-Butadien abgeleiteten Struktureinheiten.

**9.** Zusammensetzung gemäß einem der vorherigen Ansprüche, wobei die Komponenten B und C in einem Gewichtsverhältnis von 60:40 bis 80:20 enthalten sind.

**10.** Zusammensetzung gemäß einem der vorherigen Ansprüche, wobei die disperse Phase (i) der Komponente B einen mittleren Durchmesser D50 gemessen per Ultrazentrifugation von 0,3 bis 2,0 $\mu$m aufweist und wobei die disperse Phase (iii) der Komponente C einen mittleren Durchmesser D50 gemessen per Ultrazentrifugation von 0,3 bis 2,0 $\mu$m aufweist und wobei mindestens einer der beiden dispersen Phasen (i) und (iii) einen mittleren Durchmesser D50 gemessen per Ultrazentrifugation von 0,7 bis 1,5 $\mu$m aufweist.

**11.** Zusammensetzung gemäß einem der vorherigen Ansprüche, wobei die Komponenten B und C frei sind von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten und wobei die Komponenten B und C jeweils weniger als 20 ppm Ionen von Alkalimetallen und Erdalkalimetallen enthalten.

**12.** Zusammensetzungen gemäß einem der vorherigen Ansprüche, wobei die Komponenten B.2 und C.2 nur aus von 1,3-Butadien abgeleiteten Struktureinheiten bestehen und wobei die Komponenten B und C jeweils einen Gehalt an von 1,3-Butadien abgeleiteten Struktureinheiten von 8 bis 12 Gew.-% aufweisen.

**13.** Zusammensetzung gemäß einem der vorherigen Ansprüche,

enthaltend als Komponente D mindestens ein Additiv ausgewählt aus der Gruppe bestehend aus Flammschutzmitteln, Gleit- und Entformungsmitteln, Stabilisatoren, Fließfähigkeitspromotoren, Verträglichkeitsvermittlern sowie Farbstoffen und Pigmenten
und wobei die Zusammensetzung kein weiteres Pfropfpolymerisat hergestellt durch Emulsionspolymerisation enthält.

**14.** Formmasse hergestellt aus einer Zusammensetzung nach einem der Ansprüche 1 bis 13.

**15.** Formkörper, erhältlich aus einer Zusammensetzung nach einem der Ansprüche 1 bis 13 oder aus einer Formmasse gemäß Anspruch 14.

## Claims

**1.** Composition for producing a thermoplastic moulding compound, wherein the composition contains or consists of the following constituents:

A) at least one polymer selected from the group consisting of polycarbonate and polyestercarbonate,
B) rubber-modified vinyl copolymer formed from

B.1) 80% to 95% by weight, based on the rubber-modified vinyl copolymer B, of structural units derived from

B.1.1) 60% to 90% by weight, based on component B.1, of styrene
B.1.2) 10% to 40% by weight, based on component B.1, of acrylonitrile

B.2) 5% to 20% by weight, based on the rubber-modified vinyl copolymer B, of one or more elastomeric graft bases having glass transition temperatures < -50°C, containing at least 50% by weight, based on B.2, of structural units derived from 1,3-butadiene,
wherein the rubber-modified vinyl copolymer B comprises

(i) a disperse phase consisting of

(1.1) rubber particles grafted with vinyl copolymer composed of structural units B.1 and
(i.2) vinyl copolymer incorporated in the rubber particles as a separate disperse phase, likewise composed of structural units B. 1,
and

(ii) a rubber-free vinyl copolymer matrix not bound to the rubber particles and not incorporated into these rubber particles, consisting of structural units B.1,

C) rubber-modified vinyl copolymer formed from

C.1) 80% to 95% by weight, based on the rubber-modified vinyl copolymer C, of structural units derived from

C.1.1) 60% to 85% by weight, based on component C.1, of styrene
C.1.2) 10% to 35% by weight, based on component C.1, of acrylonitrile
C.1.3) 0.5% to 15% by weight, based on component C.1, of at least one alkyl (meth)acrylate,

C.2) 5% to 20% by weight, based on the rubber-modified vinyl copolymer C, of one or more elastomeric graft bases having glass transition temperatures < -50°C, containing at least 50% by weight, based on C.2, of structural units derived from 1,3-butadiene,
wherein the rubber-modified vinyl copolymer C comprises

(iii) a disperse phase consisting of

(iii.1) rubber particles grafted with vinyl copolymer composed of structural units C.1 and
(iii.2) vinyl copolymer incorporated in the rubber particles as a separate disperse phase, likewise composed of structural units C.1,
and

(iv) a rubber-free vinyl copolymer matrix not bound to the rubber particles and not incorporated into these rubber particles, consisting of structural units C.1, wherein the weight ratio of components B and C is in the range from 20:80 to 90:10.

**2.** Composition according to Claim 1, wherein components B and C are each produced by bulk polymerization.

**3.** Composition according to Claim 1 or 2, wherein component B contains the rubber-free vinyl copolymer matrix (ii) not bound to the rubber particles and not incorporated into these rubber particles, consisting of structural units B.1, in a proportion x(ii) of 60% to 95% by weight, based on B, and
component C contains the rubber-free vinyl copolymer matrix (iv) not bound to the rubber particles and not incorporated into these rubber particles, consisting of structural units C.1, in a proportion x(iv) of 60% to 95% by weight, based on C.

**4.** Composition according to Claim 3, wherein the average molecular weight gMw

$$gMw = [x(ii) \cdot Mw(ii) \cdot x(B) + x(iv) \cdot Mw(iv) \cdot x(C)] / [x(ii) \cdot x(B) + x(iv) \cdot x(C)]$$

is in the range from 125 to 160 kDa,
where

Mw(ii) is the average molecular weight Mw, measured by means of gel permeation chromatography in tetrahydrofuran against polystyrene as standard, of the vinyl copolymer matrix (ii) in component B,
x(B) is the proportion of component B in % by weight in the composition,
Mw(iv) is the average molecular weight Mw, measured by means of gel permeation chromatography in tetrahydrofuran against polystyrene as standard, of the vinyl copolymer matrix (iv) in component C and
x(C) is the proportion of component C in % by weight in the composition.

**5.** Composition according to any of the preceding claims, wherein the vinyl copolymer matrix (ii) has an average

molecular weight Mw measured by means of gel permeation chromatography in tetrahydrofuran against polystyrene as standard of 140 to 200 kg/mol and wherein the vinyl copolymer matrix (iv) has an average molecular weight Mw measured by means of gel permeation chromatography in tetrahydrofuran against polystyrene as standard of 110 to 130 kg/mol.

**6.** Composition according to any of the preceding claims, wherein component C.1.3 is n-butyl acrylate.

**7.** Composition according to any of the preceding claims, comprising

30-90% by weight of component A,
5-50% by weight of component B,
3-40% by weight of component C,
0-20% by weight of polymer additives as further component D.

**8.** Composition according to any of the preceding claims, comprising 1.5% to 7.5% by weight of structural units derived from 1,3-butadiene.

**9.** Composition according to any of the preceding claims, wherein components B and C are present in a weight ratio of 60:40 to 80:20.

**10.** Composition according to any of the preceding claims, wherein the disperse phase (i) of component B has a median diameter D50 measured by ultracentrifugation of 0.3 to 2.0 μm and wherein the disperse phase (iii) of component C has a median diameter D50 measured by ultracentrifugation of 0.3 to 2.0 μm and wherein at least one of the two disperse phases (i) and (iii) has a median diameter D50 measured by ultracentrifugation of 0.7 to 1.5 μm.

**11.** Composition according to any of the preceding claims, wherein components B and C are free of alkali metal, alkaline earth metal, ammonium or phosphonium salts of saturated fatty acids having 8 to 22 carbon atoms, resin acids, alkyl- and alkylarylsulfonic acids and fatty alcohol sulfates, and wherein components B and C each contain less than 20 ppm of ions of alkali metals and alkaline earth metals.

**12.** Composition according to any of the preceding claims, wherein components B.2 and C.2 consist solely of structural units derived from 1,3-butadiene, and wherein components B and C each have a content of structural units derived from 1,3-butadiene of 8% to 12% by weight.

**13.** Composition according to any of the preceding claims,

comprising, as component D, at least one additive selected from the group consisting of flame retardants, lubricants and demoulding agents, stabilizers, flowability promoters, compatibilizers, and dyes and pigments, and wherein the composition does not contain any further graft polymer prepared by emulsion polymerization.

**14.** Moulding compound produced from a composition according to any of Claims 1 to 13.

**15.** Moulded article obtainable from a composition according to any of Claims 1 to 13 or from a moulding compound according to Claim 14.

## Revendications

**1.** Composition pour produire une masse de moulage thermoplastique, la composition contenant les constituants suivants ou étant constituée par ceux-ci :

A) au moins un polymère choisi dans le groupe constitué par le polycarbonate et le polyestercarbonate,
B) un copolymère de vinyle modifié par caoutchouc constitué par

B.1) 80 à 95% en poids, par rapport au copolymère de vinyle modifié par caoutchouc B, de motifs structuraux dérivés de

B.1.1) 60 à 90% en poids, par rapport au composant B.1., de styrène,

B.1.2) 10 à 40% en poids, par rapport au composant B.1, d'acrylonitrile,

B.2) 5 à 20% en poids, par rapport au copolymère de vinyle modifié par caoutchouc B, d'une ou de plusieurs bases de greffage élastiques caoutchouteuses présentant des températures de transition vitreuse < -50°contenant au moins 50% en poids, par rapport à B.2, de motifs structuraux dérivés du 1,3-butadiène, le copolymère de vinyle modifié par caoutchouc B contenant

(i) une phase dispersée constituée par

(i.1) des particules de caoutchouc greffées par du copolymère de vinyle constitué par des motifs structuraux selon B.1 et
(i.2) du copolymère de vinyle, également constitué par des motifs structuraux selon B.1, inclus dans les particules de caoutchouc sous forme de phase dispersée séparée et

(ii) une matrice de copolymère de vinyle, exempte de caoutchouc, constituée par des motifs structuraux selon B.1, non liée aux particules de caoutchouc et non incluse dans ces particules de caoutchouc,

C) un copolymère de vinyle modifié par caoutchouc constitué par

C.1) 80 à 95% en poids, par rapport au copolymère de vinyle modifié par caoutchouc C, de motifs structuraux dérivés de

C.1.1) 60 à 85% en poids, par rapport au composant C.1, de styrène,
C.1.2) 10 à 35% en poids, par rapport au composant C.1, d'acrylonitrile,
C.1.3) 0,5 à 15% en poids, par rapport au composant C.1, d'au moins un ester alkylique de l'acide (méth)acrylique,

C.2) 5 à 20% en poids, par rapport au copolymère de vinyle modifié par caoutchouc C, d'une ou de plusieurs bases de greffage élastiques caoutchouteuses présentant des températures de transition vitreuse < -50°C contenant au moins 50% en poids, par rapport à C.2, de motifs structuraux dérivés du 1,3-butadiène,
le copolymère de vinyle modifié par caoutchouc C contenant

(iii) une phase dispersée constituée par

(iii.1) des particules de caoutchouc greffées par du copolymère de vinyle constitué par des motifs structuraux selon C.1 et
(iii.2) du copolymère de vinyle, également constitué par des motifs structuraux selon C.1, inclus dans les particules de caoutchouc sous forme de phase dispersée séparée et
(iv) une matrice de copolymère de vinyle, exempte de caoutchouc, constituée par des motifs structuraux selon C.1, non liée aux particules de caoutchouc et non incluse dans ces particules de caoutchouc,

le rapport pondéral des composants B et C se situant dans la plage de 20:80 à 90:10.

**2.** Composition selon la revendication 1, les composants B et C étant à chaque fois préparés par polymérisation en masse.

**3.** Composition selon la revendication 1 ou 2, le composant B contenant la matrice (ii) de copolymère de vinyle, exempte de caoutchouc, constituée par les motifs structuraux selon B.1, non liée aux particules de caoutchouc et non incluse dans ces particules de caoutchouc, en une proportion x(ii) de 60 à 95% en poids, par rapport à B, et
le composant C contenant la matrice (iv) de copolymère de vinyle, exempte de caoutchouc, constituée par les motifs structuraux selon C.1, non liée aux particules de caoutchouc et non incluse dans ces particules de caoutchouc en une proportion x(iv) de 60 à 95% en poids, par rapport à C.

**4.** Composition selon la revendication 3, le poids moléculaire moyen gMw selon

$$gMw = [x(ii) * Mw(ii) * x(B) + x(iv) * Mw(iv) * x(C)]/[x(ii) * x(B) + x(iv) * x(C)]$$

étant situé dans la plage de 125 à 160 kDa,
où

Mw(ii) représente le poids moléculaire moyen Mw, mesuré par chromatographie par perméation de gel dans du tétrahydrofuranne par rapport au polystyrène comme standard, de la matrice (ii) de copolymère de vinyle dans le composant B,
x(B) représente la proportion du composant B en % en poids dans la composition,
Mw(iv) représente le poids moléculaire moyen Mw, mesuré par chromatographie par perméation de gel dans du tétrahydrofuranne par rapport au polystyrène comme standard, de la matrice (iv) de copolymère de vinyle dans le composant C et
x(C) représente la proportion du composant C en % en poids dans la composition.

**5.** Composition selon l'une quelconque des revendications précédentes, la matrice de copolymère de vinyle selon (ii) présentant un poids moléculaire moyen Mw, mesuré par chromatographie par perméation de gel dans du tétrahydrofuranne par rapport au polystyrène comme standard, de 140 à 200 kg/mole et la matrice de copolymère de vinyle selon (iv) présentant un poids moléculaire moyen Mw, mesuré par chromatographie par perméation de gel dans du tétrahydrofuranne par rapport au polystyrène comme standard, de 110 à 130 kg/mole

**6.** Composition selon l'une quelconque des revendications précédentes, le composant C.1.3 étant de l'acrylate de n-butyle.

**7.** Composition selon l'une quelconque des revendications précédentes, contenant

30-90% en poids de composant A,
5-50% en poids de composant B,
3-40% en poids de composant C,
0-20% en poids d'additifs polymères comme autre composant D.

**8.** Composition selon l'une quelconque des revendications précédentes, contenant 1,5 à 7,5% en poids de motifs structuraux dérivés du 1,3-butadiène.

**9.** Composition selon l'une quelconque des revendications précédentes, les composants B et C étant contenus dans un rapport pondéral de 60:40 à 80:20.

**10.** Composition selon l'une quelconque des revendications précédentes, la phase dispersée (i) du composant B présentant un diamètre moyen D50, mesuré par ultracentrifugation, de 0,3 à 2,0 μm et la phase dispersée (iii) du composant C présentant un diamètre moyen D50, mesuré par ultracentrifugation, de 0,3 à 2,0 μm et au moins l'une des deux phases dispersées (i) et (iii) présentant un diamètre moyen D50, mesuré par ultrafiltration, de 0,7 à 1,5 μm.

**11.** Composition selon l'une quelconque des revendications précédentes, les composants B et C étant exempts de sels de métal alcalin, de métal alcalino-terreux, d'ammonium ou de phosphonium d'acides gras saturés comprenant 8 à 22 atomes de carbone, d'acides uriques, d'acides alkylsulfoniques et alkylarylsulfoniques et de sulfates d'alcools gras et les composants B et C contenant à chaque fois moins de 20 ppm d'ions de métaux alcalins et de métaux alcalino-terreux.

**12.** Compositions selon l'une quelconque des revendications précédentes, les composants B.2 et C.2 étant constitués uniquement de motifs structuraux dérivés du 1,3-butadiène et les composants B et C présentant à chaque fois une teneur en motifs structuraux dérivés du 1,3-butadiène de 8 à 12% en poids.

**13.** Composition selon l'une quelconque des revendications précédentes, contenant comme composant D au moins un additif choisi dans le groupe constitué par les agents ignifuges, les agents lubrifiants et de démoulage, les stabilisants, les promoteurs de l'aptitude à l'écoulement, les promoteurs de compatibilité ainsi que les colorants et les pigments et la composition ne contenant pas d'autre polymère greffé préparé par polymérisation en émulsion.

**14.** Masse de moulage préparée à partir d'une composition selon l'une quelconque des revendications 1 à 13.

**15.** Corps moulé, pouvant être obtenu à partir d'une composition selon l'une quelconque des revendications 1 à 13 ou à partir d'une masse de moulage selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2016319128 A1
- EP 2657258 A1
- WO 2014086743 A1
- WO 2007009622 A1
- WO 0162851 A1
- WO 0170884 A1
- WO 2007065577 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- WO 2004063249 A1
- WO 200105866 A1
- WO 2000105867 A
- US 5340905 A
- US 5097002 A
- US 5717057 A
- DE 2035390 A
- US 3644574 A
- DE 2248242 A
- GB 1409275 A


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNE ; BAYER AG.** Encyclopedia of Polymer Science and Engineering. 1988, vol. 11, 648-718
- Polycarbonate. **U. GRIGO ; K. KIRCHNER ; P.R. MÜLLER.** Becker/Braun, Kunststoff-Handbuch. Carl Hanser Verlag, 1992, vol. 3/1, 117-299
- **H. SCHNELL.** Chemistry and Physics of Polycarbonates. Interscience Publishers, 1964
- **W. SCHOLTAN ; H. LANGE.** *Kolloid, Z. und Z. Polymere,* 1972, vol. 250, 782-796
- **ULLMANNS.** *Enzyklopädie der Technischen Chemie,* 1980, vol. 19, 280